# EUROPÄISCHE PATENTSCHRIFT

(11) **EP 2 118 622 B1**
(45) Veröffentlichungstag und Bekanntmachung des Hinweises auf die Patenterteilung: **27.06.2018**
(21) Anmeldenummer: 08716252.5
(22) Anmeldetag: 05.03.2008
(51) Int. Cl.: G01D 11/08, G01D 13/22, B60K 37/02

(54) **KRAFTFAHRZEUG-ANZEIGEINSTRUMENT MIT AUSBALANCIERTEM ZEIGER**
AUTOMOTIVE INDICATION INSTRUMENT WITH BALANCED POINTER
INSTRUMENT D'INDICATION POUR VÉHICULE À MOTEUR COMPORTANT UN INDICATEUR EN ÉQUILIBRE

(30) Priorität: 09.03.2007 DE 102007011939; 22.05.2007 DE 102007024077
(43) Veröffentlichungstag der Anmeldung: 18.11.2009
(73) Patentinhaber: Johnson Controls Automotive Electronics GmbH, 75196 Remchingen (DE)
(72) Erfinder: MAYER, Martin, 74889 Sinsheim (DE); ALI, Ervin, Hyusein, BG- Lagera (BG); VALKOV, Valtcho, BG- 1612 Sofia (BG); ENGEL, Kristian, 76337 Waldbronn (DE); LÖFFLER, Markus, 75196 Remchingen (DE)
(74) Vertreter: Schwöbel, Thilo K.
(86) Internationale Anmeldenummer: PCT/EP2008/001735
(87) Internationale Veröffentlichungsnummer: WO 2008/110288

(56) Entgegenhaltungen:
- EP-A- 0 578 430
- DE-A1-102004 056 992
- DE-U1- 29 905 489
- GB-A- 514 790
- US-A- 5 080 035

## Beschreibung

Die Erfindung betrifft eine Anzeigevorrichtung bzw. ein Anzeigeinstrument, insbesondere für ein Kraftfahrzeug, mit einem um eine Drehachse schwenkbar angeordneten und von der Drehachse in eine Richtung weg weisenden Zeiger, wobei mit dem Zeiger um die Drehachse schwenkbar angeordnet ein Gegengewicht vorgesehen ist, wobei das Gegengewicht von der Drehachse in die zu der Richtung entgegengesetzte Gegenrichtung weg weisend vorgesehen ist. Insbesondere betrifft die Erfindung ein Anzeigeinstrument für ein Kraftfahrzeug mit einem drehbeweglichen Zeiger, der in wesentlichen Teilen rückseitig zu der kreisförmigen Mittelzone des Instruments angeordnet ist.

Solche Anzeigeinstrumente sind allgemein bekannt. Beispielsweise sind aus den Offenlegungsschriften DE 197 39 628 A1 und DE 101 20 464 A1 Anzeigeinstrumente bzw. Anzeigevorrichtungen bekannt, wobei drehbar angeordnete Zeiger ein Gegengewicht aufweisen. EP 0 578 430 A offenbart einen Zeiger und sein Herstellungsverfahren. DE 299 05 489 U1 lehrt einen einteiligen Instrumentenzeiger aus Metall. US 5 080 035 A offenbart eine Befestigungsvorrichtung für einen Instrumentenzeiger. GB 514 790 A lehrt eine verbesserte Ausführungsform eines Zeigers eines Anzeigeinstruments. Solche Gegengewichte haben für den Fall, dass sie vergleichsweise drehachsennah angeordnet sind, den Nachteil, vergleichsweise schwer, voluminös, bauraumerfordernd und aufwändig zu sein. Ferner sind sogenannte Hakenzeiger allgemein bekannt. Sie werden verwendet, um den mittleren Bereich eines Anzeigeinstruments vollständig blockadefrei zu gestalten. Dabei ist der Zeiger rückseitig des Instruments gelagert und umgreift dessen Kontur durch eine hakenförmig ausgebildete Spitze bzw. Zeigerfahne, die als einzig sichtbarer Teil vor einer Skala bewegt wird. Auf diese Weise ist es ermöglicht, dass in der Mittelzone des Anzeigeinstruments eine weitere Anzeigefunktion, etwa ein Matrixdisplay, platziert sein kann, ohne störende Wechselwirkung mit der Zeigermechanik. Nachteilig ist dabei die notwendig ausladende Form des Zeigers, weil dies die für seine Drehbewegung erforderliche Antriebs- bzw. Positionshaltekraft im Vergleich zu kleineren, instrumentenoberseitig angeordneten Zeigervarianten vergrößert. Es ist demzufolge ein stärkerer Motor vorzusehen.

Die Erfindung hat generell die Aufgabe, für erfindungsgemäße Anzeigevorrichtung eine Möglichkeit zur Verwendung von möglichst kleinen, leichten und kostengünstigen Antriebslösungen zu schaffen und damit auch für den Fall von Hakenzeigern eine kostengünstige Antriebsalternative zur Verfügung zu stellen.

Diese Aufgabe wird gelöst durch eine Anzeigevorrichtung bzw. ein Anzeigeinstrument, insbesondere für ein Kraftfahrzeug, gemäß Anspruch 1.Ferner sind die Masse des Gegengewichts und die Masse des Zeigers im Wesentlichen gleich. Insgesamt bewirken die erfindungsgemäßen Maßnahmen, die sowohl einzeln als auch kumuliert realisiert sein können, dass das Problem eines im Vergleich zu einem Zeiger ohne Gegengewicht größeren Aufwands hinsichtlich des Antriebs des Zeigers durch Ausbalancieren des Zeigers bezüglich seiner Drehachse gelöst wird. Erfindungsgemäß ist in besonders vorteilhafter Weise eine Verlängerung des Gegengewichts bzw. des dem Gegengewicht zugeordneten Zeigerteils weit über die instrumentenmittige Drehachse hinaus vorgesehen. Auf diese Weise ist das an der Antriebsachse wirkende Drehmoment des Zeigers vollständig kompensierbar. Insbesondere entfällt jegliche, durch Vertikalbeschleunigung des Fahrzeugs verursachte Belastung. Durch die weit über die Achse bzw. die Drehachse hinaus mögliche Erstreckung des Gegengewichts des erfindungsgemäßen Zeigers kann dieses Gegengewicht im Einklang mit den Hebelgesetzen aus demselben Material bestehen, aus dem der Zeiger ansonsten gebildet ist. Es ist nicht erforderlich, ein Kontergewicht aus einem Fremdmaterial höherer Dichte, beispielsweise Metall, vorzusehen, was bei achsnaher Platzierung des Gegengewichts erforderlich wäre. Dadurch kann das Gesamtgewicht des Zeigers reduziert werden. Als Folge davon sinken die Anforderungen an den einzusetzenden Motor, somit auch die Kosten für das Anzeigeinstrument.

Erfindungsgemäß ist der Zeiger als ein Hakenzeiger mit einer Zeigerfahne ausgebildet, wobei die Zeigerfahne eine erste zur Drehachse senkrechte Ebene schneidet und wobei das Gegengewicht eine zweite zur Drehachse senkrechte Ebene schneidet, wobei die erste und die zweite Ebene parallelverschoben vorgesehen sind. Dabei wird in vorteilhafter Weise die Tatsache berücksichtigt, dass durch seine rückseitige Anordnung - insbesondere des Gegengewichts - wesentliche Teile des Zeigers verdeckt sind, nämlich der der Zeigerspitze ferne Teil des Zeigers bzw. das Gegengewicht.

Weiterhin ist es erfindungsgemäß besonders vorteilhaft, wenn das Material des Gegengewichts und das Material des Zeigers zumindest zu wesentlichen Teilen gleich vorgesehen ist, insbesondere zu wesentlichen Teilen Lichtleitermaterial umfasst. Hierdurch kann in einfacher und vergleichsweise kostengünstiger Weise ein erfindungsgemäßes Anzeigeinstrument mit einem Zeiger mit Gegengewicht leicht und vergleichsweise einfach herstellbar geschaffen werden.

Weiterhin ist es erfindungsgemäß auch bevorzugt vorgesehen, dass im Bereich des Gegengewichts wenigstens eine Verstärkungsrippe vorgesehen ist. Hierdurch kann eine leichte und dennoch stabile und insbesondere hinsichtlich der Alltagsbedingungen in einem Kraftfahrzeug angepasste und lebensdauerstabile Ausgestaltung eines Anzeigeinstruments gewählt werden, das hinsichtlich des Zeigers bzw. des Gegengewichts des Zeigers auch insbesondere besonders gegen negative Auswirkungen von Vibrationen geschützt bzw. robust ist.

Erfindungsgemäß sindder Schwerpunkt des Gegengewichts und der Schwerpunkt des Zeigers im Wesentlichen in einer gemeinsamen Ebene senkrecht zur Drehachse vorgesehen. Hierdurch ist es erfindungsgemäß in besonderer Weise möglich, bei der Bewegung des Zeigers und des Gegengewichts die auftretenden Kippmomente gering zu halten, sodass hinsichtlich der Lagerung und/oder hinsichtlich des Antriebs des Zeigers mit dem Gegengewicht ein geringerer Aufwand notwendig ist und somit Kosteneinsparungen bzw. Montageerleichterungen und Aufbauvereinfachungen erreichbar sind.

Ausführungsbeispiele der Erfindung sind in der Zeichnung dargestellt und in der nachfolgenden Beschreibung näher erläutert.
Figur 1 zeigt in schematischer Darstellung eine Draufsicht auf eine Anzeigevorrichtung 1 bzw. ein Anzeigeinstrument gemäß der vorliegenden Erfindung.
Figuren 2a, 2b und 2c zeigen eine erste Ausführungsform eines erfindungsgemäßen Zeigers mit Gegengewicht für eine Anzeigevorrichtung.
Figuren 3a, 3b und 3c zeigen eine zweite Ausführungsform eines erfindungsgemäßen Zeigers mit Gegengewicht für eine Anzeigevorrichtung.
Figuren 4a, 4b und 4c zeigen eine dritte nicht beanspruchte Ausführungsform eines Zeigers mit Gegengewicht für eine Anzeigevorrichtung.

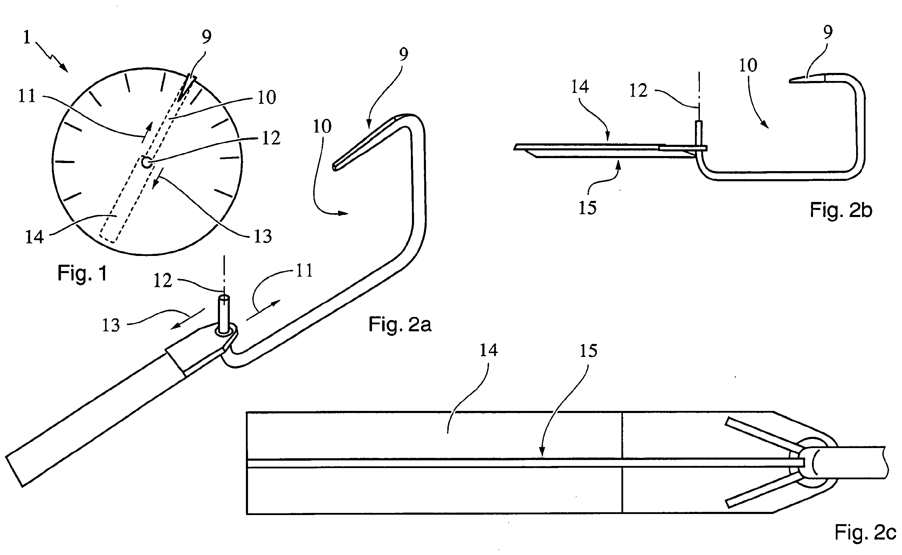

In Figur 1 ist in schematischer Darstellung eine Draufsicht auf eine Anzeigevorrichtung 1 bzw. ein Anzeigeinstrument gemäß der vorliegenden Erfindung. Die Anzeigevorrichtung 1 weist einen Zeiger 10 auf, der um eine Drehachse 12 drehbar bzw. schwenkbar angeordnet ist. Der Zeiger 10 ist hierbei von einem nicht dargestellten Motor bzw. sonstigen Antriebsmittel angetrieben. Hierbei kann es sich beispielsweise um einen Schrittmotor handeln oder auch um einen anderen Motortyp. Ferner ist um die Drehachse 12 gemeinsam mit dem Zeiger 10 drehbar bzw. schwenkbar ein Gegengewicht 14 angeordnet. Ausgehend von der Drehachse 12 erstreckt sich der Zeiger 10 in eine Richtung 11. Zu dieser Richtung 11 entgegengesetzt ist eine Gegenrichtung 13 ausgerichtet. Das Gegengewicht 14 erstreckt sich von der Drehachse 12 aus in die Gegenrichtung 13.

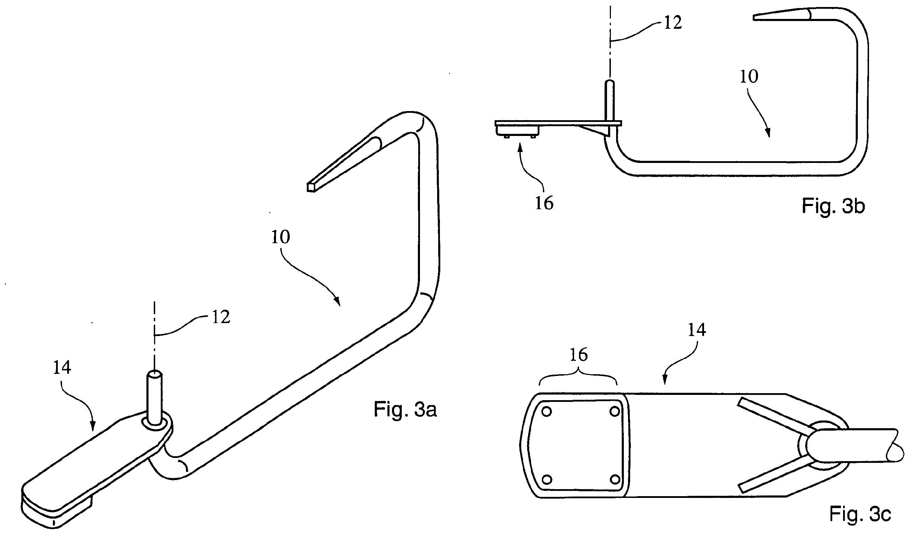

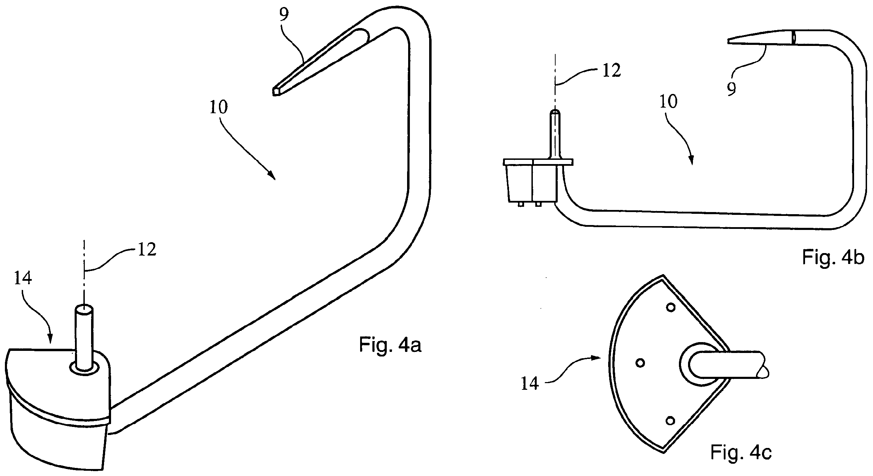

In den Figuren 2, 3 und 4 sind verschiedene Ausführungsbeispiele eines solchen Zeigers 10 mit jeweiligem Gegengewicht 14 dargestellt, nämlich in der Figur 2 eine erste Ausführungsform, in der Figur 3 eine zweite Ausführungsform und in der Figur 4 eine dritte nicht beanspruchte Ausführungsform. Hierbei ist in den Figuren 2a, 3a und 4a jeweils eine perspektivische Darstellung des Zeigers 10 und des Gegengewichts 14 dargestellt. Weiterhin ist in den Figuren 2b, 3b und 4b jeweils eine seitliche Darstellung des Zeigers 10 und des Gegengewichts 14 dargestellt. Weiterhin ist in den Figuren 2c, 3c und 4c jeweils eine Ansicht von unten auf das Gegengewicht 14 dargestellt. In allen dargestellten Ausführungsbeispielen ist der Zeiger 10 jeweils als ein sogenannter Hakenzeiger ausgebildet. Es könnte sich jedoch auch um einen geraden oder gekröpften oder sonstwie gebogenen bzw. gerundeten Zeiger 10 handeln. Ausgehend von der Drehachse 12 erstreckt sich der Zeiger 10 in die Richtung 11 und das Gegengewicht 14 in die Gegenrichtung 13. Eine Zeigerfahne 9 ist vorgesehen, um bei einer Ausbildung des Zeigers als Hakenzeiger einen Anzeigebereich zur Verfügung zu stellen, der von einem Benutzer einsehbar ist. Erfindungsgemäß ist vorgesehen, dass der Schwerpunkt (Massenmittelpunkt) des Gegengewichts 14 und der Schwerpunkt (Massenmittelpunkt) des Zeigers 10 im Wesentlichen in einer gemeinsamen Ebene senkrecht zur Drehachse 12 vorgesehen sind. Hierdurch ist in vorteilhafter Weise eine besonders ausbalancierte Bewegung mit insbesondere geringen Kippmomenten bei einer Drehung bzw. Drehbeschleunigung des Zeigers 10 mit dem Gegengewicht 14 möglich, was insbesondere die Anforderungen an die Lagerung des Zeigers 10 reduziert.
Gemäß der ersten Ausführungsform (Figuren 2a, 2b und 2c) ist das Gegengewicht 14 im wesentlichen in die Gegenrichtung 13 langerstreckt ausgebildet und weist eine Erstreckung in die Gegenrichtung 13 auf, die ungefähr der Erstreckung des Zeigers 10 in die Richtung 11 entspricht. Es kann sich hierbei beispielsweise um eine Erstreckung in Gegenrichtung 13 von etwa 50% bis etwa 150% der Erstreckung des Zeigers 10 in die Richtung 11 handeln, bevorzugt, von etwa 60% bis etwa 140%, besonders bevorzugt von etwa 70% bis etwa 130%, erfindungsgemäß von etwa 80% bis etwa 120% und in besonderer Weise bevorzugt von etwa 90% bis etwa 110%. Das Gegengewicht 14 kann beispielsweise vergleichsweise dünn ausgeführt sein und zur Verstärkung eine einzige oder eine Mehrzahl von Rippen 15 aufweisen. Hierbei kann das Gegengewicht 14 beispielsweise in einer Erstreckungsrichtung parallel zur Drehachse 12 dünn (und in einer dazu senkrechten Richtung dick) ausgebildet sein (vgl. Figur 2c), so dass bei einer Bewegung des Zeigers 10 und des Gegengewichts 14 im Wesentlichen kein Luftwiderstand zu überwinden ist und ein besonders stabiler und für vergleichsweise große Beschleunigungswerte der Bewegung des Zeigers 10 um die Drehachse 12 ausgelegter Aufbau gewählt wird. Es kann erfindungsgemäß alternativ zu einer solchen Auslegung des Gegengewichts 14 auch vorgesehen sein, dass das Gegengewicht 14 in einer Erstreckungsrichtung parallel zur Drehachse 12 vergleichsweise dick ausgeführt ist und in einer Erstreckungsrichtung parallel zu einer auf der Drehachse 12 senkrecht stehenden Ebene vergleichsweise dünn ausgeführt ist (nicht dargestellt), um im Gegensatz dazu eine große Dämpfung des Bewegungsverhaltens des Zeigers 10 und des Gegengewichts 14 durch die Wirkung des Luftwiderstands zu ermöglichen.

Gemäß der ersten Ausführungsform ist es insbesondere bevorzugt vorgesehen, dass sowohl der Zeiger 10 als auch das Gegengewicht 14 aus dem gleichen Material hergestellt sind bzw. im Wesentlichen das gleiche Material umfassen. Insbesondere in diesem Fall haben Zeiger 10 und Gegengewicht 14 im Wesentlichen die gleiche Masse, d.h. das Gegengewicht 14 hat beispielsweise eine Masse von etwa 80% bis etwa 120%, bevorzugt von etwa 90% bis etwa 110% der Masse des Zeigers 10.
Gemäß der zweiten Ausführungsform (Figuren 3a, 3b und 3c) ist das Gegengewicht 14 ebenfalls in die Gegenrichtung 13 langerstreckt ausgebildet, jedoch mit einer geringeren Erstreckung als die Erstreckung des Zeigers 10 in die Richtung 11, insbesondere etwa der halben Erstreckung des Zeigers 10, beispielsweise etwa 30% bis etwa 70% der Erstreckung des Zeigers 10, bevorzugt etwa 40 % bis etwa 60% der Erstreckung des Zeigers 10. Gemäß der dritten nicht beanspruchten Ausführungsform (Figuren 4a, 4b und 4c) ist das Gegengewicht 14 ebenfalls in die Gegenrichtung 13 langerstreckt ausgebildet, jedoch mit einer noch geringeren Erstreckung, beispielsweise etwa 10% bis etwa 35% der Erstreckung des Zeigers 10, bevorzugt etwa 20 % bis etwa 25% der Erstreckung des Zeigers 10. Zur Ausbalancierung des Zeigers 10 mit dem Gegengewicht 14 ist es bei der zweiten und dritten Ausführungsform bevorzugt vorgesehen, dass das Gegengewicht 14 ein Bauteil 16 aufweist, welches aus einem anderen Material als das Material des Zeigers 10 und des restlichen Gegengewichts 14 vorgesehen ist. Bei dem Bauteil 16 kann es sich beispielsweise um ein metallenes Bauteil 16 handeln. Generell gilt, dass für das Bauteil 16 ein Material mit einer größeren Dichte als das Material des Zeigers 10 bevorzugt wird. Wegen der größeren Erstreckung des Gegengewichts 14 in Gegenrichtung 13 bei der zweiten Ausführungsform (Figuren 3) als bei der dritten Ausführungsform (Figuren 4) ist es bei der dritten Ausführungsform notwendig, dass das Bauteil 16 eine größere Masse aufweist als bei der zweiten Ausführungsform.

### Bezugszeichenliste

- 1: Anzeigevorrichtung
- 2: Drehachse
- 9: Zeigerfahne
- 10: Zeiger
- 11: Richtung
- 12: Drehachse
- 13: Gegenrichtung
- 14: Gegengewicht
- 15: Verstärkungsrippen
- 16: Bauteil

## Patentansprüche

1. Anzeigevorrichtung (1), insbesondere für ein Kraftfahrzeug, mit einem um eine Drehachse (12) schwenkbar angeordneten und von der Drehachse (12) in eine Richtung (11) weg weisenden Zeiger (10), wobei mit dem Zeiger (10) um die Drehachse (12) schwenkbar angeordnet ein Gegengewicht (14) vorgesehen ist, wobei das Gegengewicht (14) von der Drehachse (12) in die zu der Richtung (11) entgegengesetzte Gegenrichtung (13) weg weisend vorgesehen ist, wobei das Gegengewicht (14) den Zeiger(10) ausbalanciert dahingehend, dass das Material des Gegengewichts (14) und das Material des Zeigers (10) im Wesentlichen die gleiche Dichte aufweist und dass das Gegengewicht (14) ausgehend von der Drehachse (12) in die Gegenrichtung (13) eine Erstreckung von etwa 80% bis etwa 120% aufweist wie der Zeiger (10) ausgehend von der Drehachse (12) in die Richtung (11), **dadurch gekennzeichnet, dass** der Zeiger (10) als ein Hakenzeiger mit einer Zeigerfahne (9) ausgebildet ist, wobei die Zeigerfahne (9) eine erste zur Drehachse (12) senkrechte Ebene schneidet und wobei das Gegengewicht (14) eine zweite zur Drehachse (12) senkrechte Ebene schneidet, wobei die erste und die zweite Ebene parallelverschoben vorgesehen sind, wobei der Schwerpunkt des Gegengewichts (14) und der Schwerpunkt des Zeigers (10) im Wesentlichen in einer gemeinsamen Ebene senkrecht zur Drehachse (12) vorgesehen sind.

2. Anzeigevorrichtung (1) nach Anspruch 1 oder nach dem Oberbegriff des Anspruchs 1, **dadurch gekennzeichnet, dass** die Masse des Gegengewichts (14) und die Masse des Zeigers (10) im Wesentlichen gleich sind.

3. Anzeigevorrichtung (1) nach einem der vorhergehenden Ansprüchen, **dadurch gekennzeichnet, dass** das Material des Gegengewichts (14) und das Material des Zeigers (10) zumindest zu wesentlichen Teilen gleich vorgesehen ist, insbesondere zu wesentlichen Teilen Lichtleitermaterial umfasst.

4. Anzeigevorrichtung (1) nach einem der vorhergehenden Ansprüche, **dadurch gekennzeichnet, dass** im Bereich des Gegengewichts (14) wenigstens eine Verstärkungsrippe (15) vorgesehen ist.

## Claims

1. Indicating device (1), in particular for a motor vehicle, with a pointer (10) which is arranged pivotably about an axis of rotation (12) and points away from the axis of rotation (12) in a direction (11), wherein, with the pointer (10) arranged pivotably about the axis of rotation (12), a counterweight (14) is provided, wherein the counter-weight (14) is provided pointing away from the axis of rotation (12) in the counter direction (13) opposed to the direction (11), wherein the counterweight (14) balances the pointer (10) to the effect that the material of the counterweight (14) and the material of the pointer (10) has essentially the same density, and that the counterweight (14) has an extent starting from the axis of rotation (12) in the counter direction (13) of approximately 80% to approximately 120%, like the pointer (10) starting from the axis of rotation (12) in the direction (11), **characterized in that** the pointer (10) is designed as a hook pointer with a pointer vane (9), wherein the pointer vane (9) intersects a first plane perpendicular to the axis of rotation (12), and wherein the counterweight (14) intersects a second plane perpendicular to the axis of rotation (12), wherein the first and the second plane are provided in a manner displaced in parallel, wherein the centre of gravity of the counterweight (14) and the centre of gravity of the pointer (10) are substantially provided in a common plane perpendicular to the axis of rotation (12) .

2. Indicating device (1) according to Claim 1 or according to the precharacterizing clause of Claim 1, **characterized in that** the mass of the counterweight (14) and the mass of the pointer (10) are substantially identical.

3. Indicating device (1) according to either of the preceding claims, **characterized in that** the material of the counterweight (14) and the material of the pointer (10) are at least substantially identical, in particular at least substantially comprise optical waveguide material.

4. Indicating device (1) according to one of the preceding claims, **characterized in that** at least one reinforcing rib (15) is provided in the region of the counterweight (14).

## Revendications

1. Instrument d'indication (1), en particulier pour un véhicule à moteur, comportant un indicateur (10) disposé de façon pivotante autour d'un axe de rotation (12) et indiquant dans une direction (11) s'éloignant de l'axe de rotation (12), dans lequel il est prévu avec l'indicateur (10) un contrepoids (14) disposé de façon pivotante autour de l'axe de rotation (12), dans lequel le contrepoids (14) est prévu pour indiquer dans la direction opposée (13) s'éloignant de l'axe de rotation (12) à l'inverse de la direction (11), dans lequel le contrepoids (14) équilibre l'indicateur (10), en ce sens que le matériau du contrepoids (14) et le matériau de l'indicateur (10) présentent essentiellement la même densité et que le contrepoids (14) présente à partir de l'axe de rotation (12) dans la direction opposée (13) une extension d'environ 80 % à environ 120 % de celle de l'indicateur (10) à partir de l'axe de rotation (12) dans la direction (11), **caractérisé en ce que** l'indicateur (10) est formé par un indicateur à crochet avec une aiguille d'indicateur (9), dans lequel l'aiguille d'indicateur (9) coupe un premier plan perpendiculaire à l'axe de rotation (12) et dans lequel le contrepoids (14) coupe un second plan perpendiculaire à l'axe de rotation (12), dans lequel le premier plan et le second plan sont prévus de façon parallèlement décalée, dans lequel le centre de gravité du contrepoids (14) et le centre de gravité de l'indicateur (10) sont prévus essentiellement dans un plan commun perpendiculaire à l'axe de rotation (12).

2. Instrument d'indication (1) selon la revendication 1 ou selon le préambule de la revendication 1, **caractérisé en ce que** la masse du contrepoids (14) et la masse de l'indicateur (10) sont essentiellement égales.

3. Instrument d'indication (1) selon l'une quelconque des revendications précédentes, **caractérisé en ce que** le matériau du contrepoids (14) et le matériau de l'indicateur (10) sont prévus identiques au moins pour des parties essentielles, en particulier contient un matériau de guide de lumière pour des parties essentielles.

4. Instrument d'indication (1) selon l'une quelconque des revendications précédentes, **caractérisé en ce qu'**il est prévu au moins une nervure de renforcement (15) dans la région du contrepoids (14).
